# EUROPEAN PATENT APPLICATION

(11) **EP 3 032 477 A1**
(43) Date of publication of application: **15.06.2016**
(21) Application number: 15198220.4
(22) Date of filing: 07.12.2015
(51) Int. Cl.: G06Q 20/20, G06Q 10/10, G06Q 30/04, G07G 1/14, G07G 1/00

(54) **INFORMATION PROCESSING APPARATUS AND METHOD FOR UPDATING DICTIONARY DATA BY THE SAME**

(30) Priority: 08.12.2014 JP 2014248377
(71) Applicant: Toshiba TEC Kabushiki Kaisha, Tokyo 141-0032 (JP)
(72) Inventor: FUKUDA, Masatsugu, Shinagawa-ku, Tokyo 141-0032 (JP)
(74) Representative: Takeuchi, Maya

(57) **Abstract**

An information processing apparatus comprises a first dictionary storage module configured to store first dictionary data in which a first feature amount calculated according to commodity information or image of a commodity is set; an image storage module configured to store an image serving as basis of calculation of the first feature amount additionally set in the first dictionary data; a second dictionary storage module configured to store a second dictionary data of successor of the first dictionary data; an additional information setting module configured to extract commodity information to which additional setting or change setting is executed from the first dictionary data to set the extracted commodity information in the second dictionary data; and a feature amount re-calculation module configured to re-calculate a second feature amount according to the image stored in the image storage module to set the calculated second feature amount in the second dictionary data.

## Description

### FIELD

Embodiments described herein relate to an information processing apparatus and a method for updating dictionary data by the information processing apparatus.

### BACKGROUND

A conventional POS (Point-of-Sale) system identifies the category of a commodity when a cashier or operator holds the commodity over an object recognition scanner. The identified commodity is registered as a purchased commodity. The commodity is identified by comparing a feature amount generated from a captured image of the commodity held over the object recognition scanner with dictionary data in which information of feature amounts of various commodities is pre-registered.

The dictionary data includes a conversion data for generating a feature amount according to a captured image, and the improvement thereof is constantly carried out to increase the accuracy of commodity identification based on a converted feature amount. The improved dictionary data is distributed to each store from a selling agency or distributer as an updated edition for the use in the POS system. However, this process requires a significant burden on users (strores) whereby system errors in POS system are likely to occur.

### DESCRIPTION OF THE DRAWINGS

Fig. 1 is a diagram illustrating the structures relating to an automatic update processing of dictionary data;
Fig. 2 is a diagram illustrating the overall structure of a network;
Fig. 3 is a block diagram illustrating the hardware structure of a store server;
Fig. 4 is a concept diagram illustrating the data structure of an existing dictionary file;
Fig. 5 is a diagram illustrating the data structure of commodity-related information in the form of a table;
Fig. 6 is a block diagram illustrating the functional structure of the store server;
Fig. 7 is a flowchart illustrating the operation of a whole system;
Fig. 8 is a flowchart illustrating the detailed flow of an automatic setting processing;
Fig. 9 is a diagram illustrating the set-state of the commodity-related information contained in the existing dictionary file;
Fig. 10 is diagram illustrating the storage-state of additional learning images;
Fig. 11 is a concept diagram illustrating the data structure of an updated dictionary file; and
Fig. 12 is a diagram illustrating the data structure of the commodity-related information contained in the updated dictionary file.

### DETAILED DESCRIPTION

In accordance with an embodiment, an information processing apparatus comprises a first dictionary storage module configured to store a first dictionary data in which a first feature amount calculated according to a commodity information or image of a commodity is set; an image storage module configured to store the image serving as a basis of the calculation of the first feature amount additionally set in the first dictionary data; a second dictionary storage module configured to store a second dictionary data of successor of the first dictionary data; an additional information setting module configured to extract the commodity information to which the additional setting or change setting is executed from the first dictionary data stored in the first dictionary storage module to set the extracted commodity information in the second dictionary data; and a feature amount re-calculation module configured to re-calculate a second feature amount corresponding to the second dictionary data according to the image stored in the image storage module to set the calculated second feature amount for the commodity set in the second dictionary data.

Thus, the present invention makes it possible to update automatically the existing dictionary data when an improved dictionary data is distributed as an updated edition for the use in the system.

Preferably, the first dictionary storage module stores, as the first dictionary data, the data in which at least commodity code of a new commodity is additionally set as the commodity information of the commodity and the data in which a first feature amount of the new commodity is additionally set as the first feature amount, the additional information setting module extracts the commodity code of the new commodity that is additionally set from the first dictionary data stored in the first dictionary storage module to set the extracted commodity code in the second dictionary data, and the feature amount re-calculation module re-calculates the second feature amount corresponding to the second dictionary data according to the image of the new commodity stored in the image storage module to additionally set the calculated second feature amount in the second dictionary data in association with the commodity code.

Preferably, the commodity information to which additional setting or change setting is executed includes information indicating a commodity name of each commodity or information indicating whether or not presumption of a commodity is carried out based on a feature amount.

Preferably, the first dictionary storage module stores the first dictionary data in which the first feature amount of an existing commodity is additionally set as the first feature amount, and the feature amount re-calculation module re-calculates the second feature amount corresponding to the second dictionary data according to the image of the existing commodity stored in the image storage module to additionally set the calculated second feature amount in association with the commodity code of the existing commodity preset in the second dictionary data.

Preferably, the first dictionary data includes a proper information contained in the first dictionary data for deriving the first feature amount from the image of the commodity, and the second dictionary data includes a proper information contained in the second dictionary data for deriving the second feature amount from the image of the commodity.

The present invention also relates to a method for updating a dictionary data, including: setting additionally a first feature amount calculated according to a commodity information or image of a commodity in a first dictionary data; storing the image serving as a basis of the calculation of the first feature amount additionally set in the first dictionary data; storing a second dictionary data of a successor of the first dictionary data; extracting the commodity information to which an additional setting is executed from the first dictionary data; setting the extracted commodity information in the second dictionary data; re-calculating a second feature amount corresponding to the second dictionary data according to the image; and additionally setting the calculated second feature amount for the commodity set in the second dictionary data.

The embodiment of the information processing apparatus and the method for updating dictionary data by the information processing apparatus is described below in detail with reference to the accompanying drawings.

In the present embodiment, an example of the application of the information processing apparatus to a store server is described by taking, as an non-limiting example, an in-store system including an object recognition apparatus (e.g. a self-checkout POS terminal) and a store server for uniformly managing the object recognition apparatuses.

The structures relating to an automatic update processing of a dictionary data of the in-store system are described first. The dictionary data collects data for comparison referred to as a feature amount of each commodity. The feature amount, which is data indicating features of each commodity, including color, pattern and concave-convex state of the commodity, is converted (calculated) according to the appearance image of each commodity with the use of a dictionary dedicated conversion data to be derived. The conversion data has a specific data according to version of a dictionary. The data collected in the dictionary data is converted in advance from the appearance image of the commodity with the use of the dictionary dedicated conversion data. At the time of a commodity transaction, the dictionary data is used as data for comparison to presume the category of a commodity photographed by an image capturing section through comparison. If an updated edition of successor of the existing dictionary data is issued or distributed, it is necessary to upgrade the version of the dictionary data from the existing edition to the updated edition at the store side. The existing edition is hereinafter referred to as 'existing dictionary data (first dictionary data)' and the updated edition is hereinafter referred to as 'updated dictionary data (second dictionary data)'.

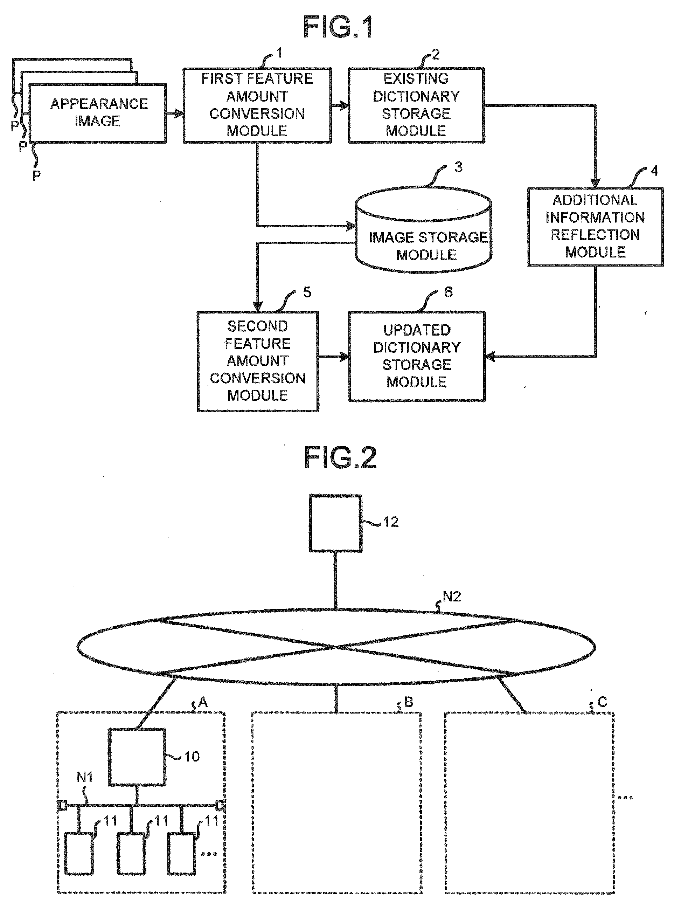

Fig. 1 is a diagram illustrating the structures relating to the automatic update processing of the dictionary data in the in-store system. The solid arrow shown in Fig. 1 indicates a main control direction.

In Fig. 1, a first feature amount conversion module 1, an existing dictionary storage module (a first dictionary storage module) 2, an image storage module 3, an additional information reflection module (an additional information setting module) 4, a second feature amount conversion module (a feature amount re-calculation module) 5 and an updated dictionary storage module (a second dictionary storage module) 6 are shown as modules relating to the automatic update processing of dictionary data.

The first feature amount conversion module 1 converts an appearance image P of a commodity output from an image capturing section into a feature amount for an existing dictionary (referred to as "a first feature amount") using an existing dictionary dedicated conversion data (first conversion data). If the appearance image P of the commodity is converted into the first feature amount, then the first feature amount conversion module 1 outputs a first feature amount registration request to the existing dictionary storage module 2. Further, the original image (appearance image P) to which the conversion into the first feature amount is carried out is output to the image storage module 3.

The existing dictionary storage module 2 stores the existing dictionary data and updates a registered content in response to a request. For example, the existing dictionary storage module 2 stores the dictionary data right before the updated dictionary data is provided by the selling agency as the existing dictionary data. Moreover, if there is the first feature amount registration request from the first feature amount conversion module 1, the existing dictionary storage module 2 registers the first feature amount in the existing dictionary data. In this way, the registered content of the existing dictionary data initially provided from the selling agency is updated. Further, if there is a request for addition of new commodity information or a request for change or modification of existing commodity information, the existing dictionary storage module 2 updates the existing dictionary data according to the content of the request. That is, if there is a request for addition of the new commodity information, the existing dictionary storage module 2 adds the commodity information of the new commodity in the existing dictionary data. Further, if there is a request for modification of the existing commodity information, the existing dictionary storage module 2 modifies the commodity information of the existing commodity contained in the existing dictionary data.

The image storage module 3 stores an image (appearance image P) right before the conversion to the first feature amount output from the first feature amount conversion module 1 is carried out.

The additional information reflection module 4, the second feature amount conversion module 5 and the updated dictionary storage module 6 are updating modules for updating dictionary data after the updated dictionary data is distributed.

The additional information reflection module 4 mainly extracts, from the existing dictionary data stored in the existing dictionary storage module 2, the commodity information (additional information) added or modified by the existing dictionary storage module 2 and sets the extracted additional information in updated dictionary data (the updated dictionary data stored in the updated dictionary storage module 6 described later) to reflect the addition or modification of the commodity information.

The 'additional information' refers to a proper information of a store which is later added to or used to modify the initial dictionary data provided from the selling agency at the store side. For example, the 'additional information' includes instruction information for each commodity (hereinafter referred to as an 'application state') indicating whether or not presumption of a commodity is executed based on a commodity code, a commodity name or a feature amount, that is, whether or not it is applicable to an object recognition processing. Thus, the 'additional information' herein refers to information which can be identified by an object recognition apparatus as the same content no matter whether the 'additional information' is set in the existing dictionary data or the updated dictionary data.

Further, the conversion data for converting the appearance image P of the commodity into the feature amount of the commodity is different in the existing dictionary data and updated dictionary data.

Even for the same appearance image P, the conversion data for converting the appearance image P into the feature amount registered in the existing dictionary data and into the feature amount registered in updated dictionary data is different and is therefore assigned with different values. That is, even if the feature amount contained in the existing dictionary data is moved as that contained in the updated dictionary data, the moved feature amount is not identified by the object recognition apparatus as identical to the feature amount in the existing dictionary data. Thus, the feature amount of the commodity is not included in the 'additional information'.

The second feature amount conversion module 5 reconverts the appearance image of the commodity into a feature amount (referred to as "a second feature amount") for updated dictionary using updated dictionary dedicated conversion data (second conversion data) . The second feature amount conversion module 5 converts the original image (the appearance image P) stored in the image storage module 3 right before conversion is performed into a second feature amount. If the original image of the commodity is converted into the second feature amount, then the second feature amount conversion module 5 outputs a request for the registration of the second feature amount to the updated dictionary storage module 6.

The updated dictionary storage module 6 stores updated dictionary data and updates a registered content in response to a request. Specifically, the updated dictionary storage module 6 stores the updated dictionary data provided from the selling agency. Then, the updated dictionary storage module 6 updates the registered or set content of the updated dictionary data according to the additional information reflected by the additional information reflection module 4. Further, if there is a request for the registration of the second feature amount, then the second feature amount is registered in the updated dictionary data. In this way, the registered content of the second feature amount contained in the updated dictionary data is updated.

The modules 1-6 relating to the automatic update processing of dictionary data may be integrated in a single information processing apparatus (a self-checkout POS terminal, a store server or a POS terminal capable of communicating with a vertical type scanner) or dispersed in a plurality of information processing apparatuses. For example, the modules 1-6 may be dispersed in such a manner that the first feature amount conversion module 1 thereof is arranged in the self-checkout POS terminal or the vertical type scanner equipped with an object recognition apparatus, and the rest is arranged in the store server.

Next, the specific structure of a store server is exemplified referring to an example in which the modules 1-6 are dispersed in a plurality of information processing apparatuses.

The network structure relating to the automatic update processing of dictionary data is described first.

Fig. 2 is a diagram exemplifying a network structure including an in-store system.

In-store systems are separately constructed in the stores A, B, C ... shown in Fig. 2. The in-store system in the store A consists of a store server 10 and a self-checkout POS terminal 11 serving as an object recognition apparatus. A plurality of self-checkout POS terminals 11 is arranged in the store A. The store server 10 is arranged in a back office of the store A or a headquarters server room for managing all stores.

The self-checkout POS terminal 11 operates as the object recognition apparatus in which the image capturing section for capturing the image of the commodity such as a color CCD (Charge Coupled Device) or a color CMOS (Complementary MOS) and an object recognition engine for carrying out an object recognition processing on the appearance image of the commodity obtained from the image capturing section are provided. The self-checkout POS terminal 11 also operates as a transaction apparatus (a commodity sales data processing apparatus and a settlement apparatus) which registers the commodity determined through the object recognition processing as a sales or purchased commodity and carries out a settlement processing for the registered commodity.

The store server 10 and each self-checkout POS terminal 11 can be connected with a network N1 such as a LAN (Local Area Network) to transfer an image or a dictionary data via the network N1.

The store server 10 mainly distributes the latest dictionary file to each self-checkout POS terminal 11 on the network N1. Further, the store server 10 receives a first feature amount and an additional learning image (the original image of the first feature amount) sent from the self-checkout POS terminal 11.

Another self-checkout POS terminal 11 receives the latest dictionary file from the store server 10 and stores the received dictionary file in a storage section. Further, at the time of additional learning of the commodity, another self-checkout POS terminal 11 generates the first feature amount from the additional learning image of the commodity, and sends the first feature amount and the additional learning image to the store server 10.

The store server 10 is further connectable to an Internet N2. If an updated edition of a dictionary is released, then the store server 10 downloads the updated dictionary file from a distribution server 12 constructed on the Internet N2.

Further, it is assumed that the in-store networks of the other stores (store B, C ...) other than the store A shown in Fig. 2 have the same structure as the store A.

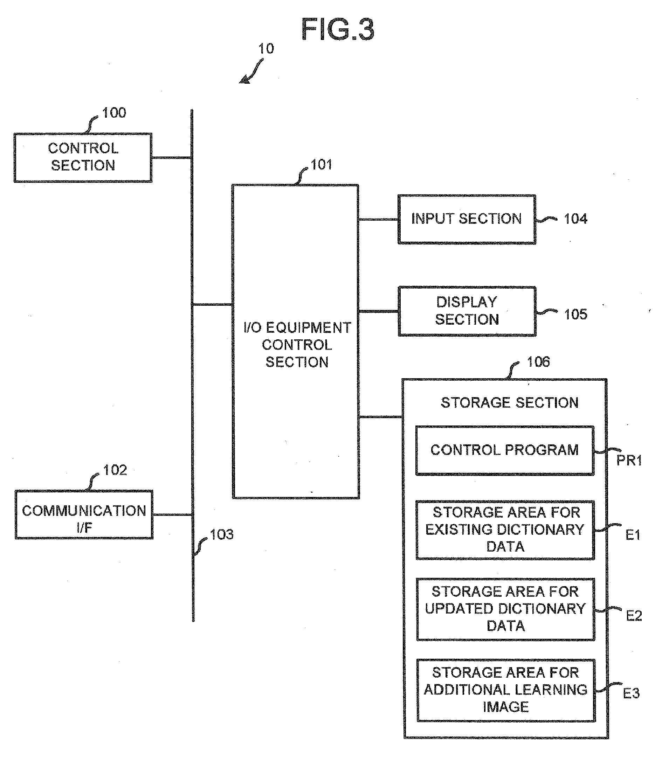

Fig. 3 is a block diagram illustrating the hardware structure of the store server 10.

The store server 10 is formed by connecting a control section 100 consisting of a CPU (Central Processing Unit), a ROM (Read Only Memory), a RAM (Random Access Memory) and the like with an I/O device control section 101 and a communication I/F 102 via a bus line 103.

The CPU is a central processing unit for executing various programs and controlling each section.

The ROM is a nonvolatile memory such as an EEPROM (Electrically Erasable Programmable Read Only Memory) or a flash ROM.

The RAM is a volatile memory such as a SRAM (Static Random Access Memory) or a DRAM (Dynamic Random Access Memory). The RAM is used as a working area of a program executed by the CPU.

The I/O device control section 101 which is connected with an input section 104 such as a keyboard, a display section 105 such as a liquid crystal display and a storage section 106 such as an HDD (Hard Disk Drive) controls the communication between the CPU and each of the sections 104-106.

The input section 104 converts an input operation of the user into an input signal and sends the input signal to the CPU via the I/O device control section 101.

The display section 105 outputs screen information sent from the CPU to a display screen on a liquid crystal display.

The storage section 106 stores an OS (Operating System) and various programs. One of the various programs is a control program PR1. The control program PR1 includes a program for automatic update of a dictionary and a program for object recognition. Further, the storage section 106 has a storage area E1 for storing the existing dictionary data, a storage area E2 for storing updated dictionary data and a storage area E3 for storing an additional learning image.

The communication I/F 102 is a communication interface which is connected with the networks N1 and N2 to communicate with the self-checkout POS terminal 11 and the distribution server 12.

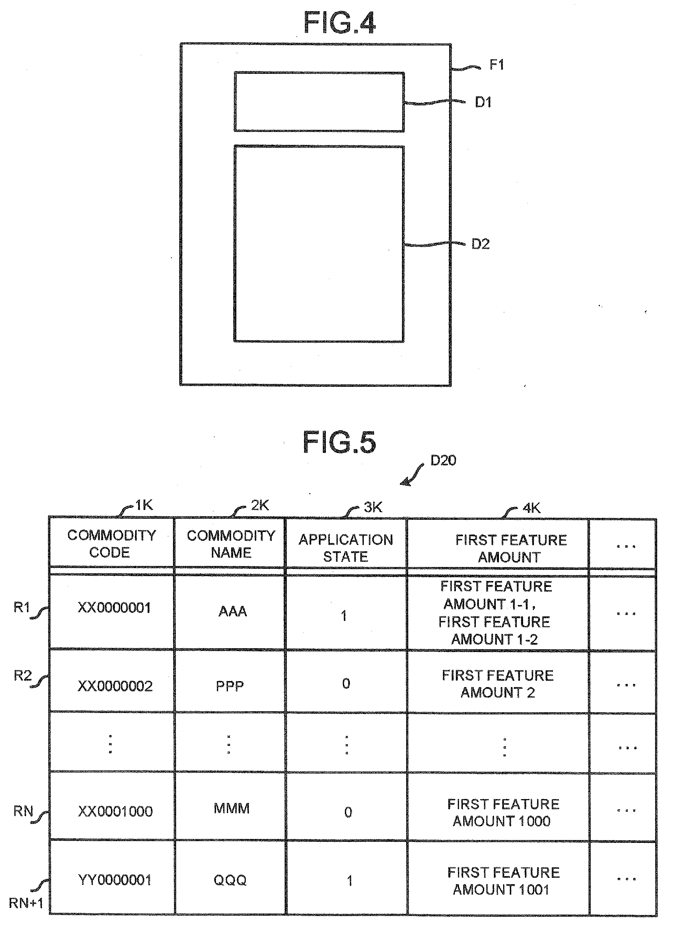

Fig. 4 and Fig. 5 are diagrams illustrating the existing dictionary file.

Fig. 4 is a concept diagram illustrating the data structure of the existing dictionary file.

As shown in Fig. 4, the existing dictionary file F1 includes a first conversion data D1 and a commodity-related information D2.

For example, the values of the various parameters used for the conversion processing into a first feature amount are defined in the first conversion data D1.

The commodity-related information of each commodity such as a commodity code, a commodity name, an application state, a first feature amount and the like is set in the commodity-related information D2.

Further, for the first conversion data D1, the values contained in the dictionary file at the time of being distributed from the distribution server 12 cannot be rewritten (changed or added). For the commodity-related information D2, the addition or change to values of the existing commodities included in the dictionary file at the time of being distributed can be rewritten.

Fig. 5 is a diagram exemplifying the data structure of the commodity-related information D2 in the form of a table. Commodity-related information D20 shown in Fig. 5 includes data corresponding to items 'commodity code 1K', 'commodity name 2K', 'application state 3K' and 'first feature amount 4K'.

The 'commodity code 1K' is an item indicating an identification code for uniquely identifying a commodity. The identification code consisting of nine-digit alphanumeric characters is shown in an area corresponding to the item ' commodity code 1K'. The first two digits of the identification code are an identifier for identifying whether or not it is a commodity code of an existing commodity or a commodity code of a new commodity later added. The first two digits being 'XX' represents an existing commodity while the first two digits being 'YY' represents a new commodity. At the initial distribution stage of the distribution server 12, identification codes of only the existing commodities, that is, only the identification code of the first two digits 'XX' is set in the corresponding area of the item 'commodity code 1K'. The record RN+1 (N is an integer) shown in Fig. 5 is the commodity-related information of a new commodity that is added at the store side after the distribution processing, and thus, the first two digits of the identification code in the corresponding area of the commodity code 1K of the new commodity is set to 'YY'.

The 'commodity name 2K' is an item indicating commodity name of the commodity. The commodity name at the time of distribution can be changed at the store side after the distribution from the distribution server 12. The commodity name changed at the store side is shown in a corresponding area of the item 'commodity name 2K' . For example, a commodity name 'AAA' changed from the commodity name 'aaa' at the time of distribution is shown in the corresponding area of the item 'commodity name 2K' of the record R1.

The 'application state 3K' is an item indicating whether or not the presumption of a commodity based on a feature amount is carried out. A flag '1' is set in a corresponding area of the item 'application state 3K' in the case of ' execution: valid', and a flag '0' is set in a corresponding area of the item 'application state 3K' in the case of 'not execution: invalid'. It is assumed that the flag '1' indicating "valid" is set as a default. Thus, the flags '0' shown in corresponding areas of the item 'application state 3K' are all rewritten later.

The 'first feature amount 4K' is an item indicating a first feature amount of a commodity. Further, it is assumed that at least one of the first feature amounts is set in a corresponding area of the item 'first feature amount 4K' of each commodity at the initial distribution stage of the distribution server 12. Through the under-mentioned additional learning carried out at the store side for each commodity, the store server 10 adds a first feature amount of a commodity, to which the additional learning is carried out, obtained through the additional learning in a corresponding area of the item 'first feature amount 4K' . Two feature amounts (a first feature amount 1-1 and a first feature amount 1-2) of the existing commodity recorded in the record R1 shown in Fig. 5 are shown in the corresponding area of the item 'first feature amount 4K'. The first feature amount (the first feature amount 1-1) represents a feature amount set at the initial distribution stage. The second feature amount (the second feature amount 1-2) represents a feature amount which is obtained through the additional learning for the existing commodity at the store side and added by the store server 10 after the distribution is carried out. Further, the feature amount (a first feature amount 1001) of the record RN+1 indicating the commodity-related information of a new commodity shown in a corresponding area of the item 'first feature amount 4K' is also a feature amount which is obtained through the additional learning for the new commodity carried out at the store side and added by the store server 10 after the distribution is carried out.

The structure of the existing dictionary file is described above with reference to Fig. 4 and Fig. 5 and the updated dictionary file has a substantially identical structure. The updated dictionary file is mainly different from the existing dictionary file in that the existing dictionary dedicated first conversion data D1 is replaced with the updated dictionary dedicated conversion data (second conversion data) different from the first conversion data D1. Therefore, the corresponding area of the item 'first feature amount 4K' is also altered to the corresponding area of the second feature amount according to the above-replacement. In the case of the updated dictionary file, the store server 10 sets the second feature amount converted using the second conversion data in the corresponding area of the second feature amount.

Sequentially, the functional structure of the store server 10 is described.

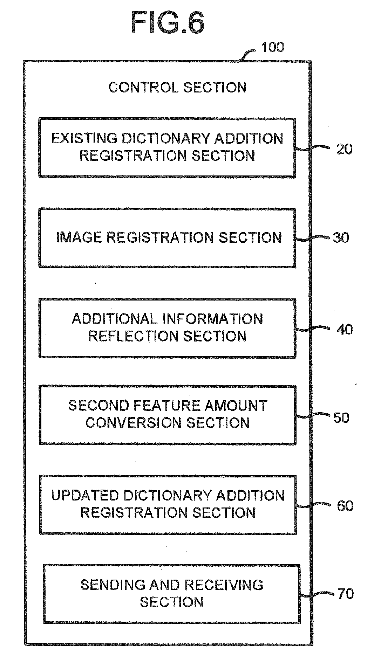

Fig. 6 is a block diagram illustrating the functional structure of the store server 10.

The control section 100 functions as an existing dictionary addition registration section (a first addition setting module) 20, an image registration section (an image storage module) 30, an additional information reflection section (an additional information setting module) 40, a second feature amount conversion section 50 and an updated dictionary addition registration section 60 acting as a second addition setting module and a sending/receiving section 70.

These functions are realized through the execution of a program (the control program PR1) in the ROM or the storage section 106 by the CPU of the control section 100.

The existing dictionary addition registration section 20 has a function of changing the content of the information existing in the existing dictionary file F1 distributed from the distribution server 12. The existing dictionary addition registration section 20 also has a function of newly setting the record of a new commodity composed of information indicating a commodity code 1K, a commodity name 2K and an application state 3K.

Specifically, the existing dictionary addition registration section 20 displays the content of the commodity-related information D2 included in the existing dictionary file F1 on a display screen using a text editor. The manager rewrites the data contained in the commodity-related information D2 from existing information to new information through input in the text format on the display screen to change it. Further, if there is a new commodity, the manager additionally inputs the record information of the new commodity in the commodity-related information D2. Then, the existing dictionary addition registration section 20 overwrites the commodity-related information D2 of the existing dictionary file F1 with the changed or added content to store the changed or added content in the storage section 106 (the storage area E1 of the existing dictionary file). Alternatively, a setting screen for setting the content of the commodity-related information D2 of the existing dictionary file F1 is displayed on the display screen to receive the change or additional input in the text format by the manager through the setting screen. Moreover, the changed or added content is overwritten in the commodity-related information D2 of the existing dictionary file F1 to store it in the storage section 106 (the storage area E1 of the existing dictionary file).

Further, the value of the commodity name 2K of each commodity shown in Fig. 5 is changed from lowercase letters to uppercase letters and the set value of the application state 3K shown in Fig. 5 is changed from '1' to '0' by the operation of the existing dictionary addition registration section 20.

Further, in the record RN+1 showing the commodity-related information of the new commodity as shown in Fig. 5, the values corresponding to the items 'commodity code 1K', 'commodity name 2K' and 'application state 3K' are also obtained by the operation of the existing dictionary addition registration section 20.

The existing dictionary addition registration section 20 further has an addition registration function of registering the content of the additional learning carried out by the self-checkout POS terminal 11 after the existing dictionary file to which addition or change is carried out is distributed to the self-checkout POS terminal 11.

The existing dictionary addition registration section 20 registers the first feature amount generated through the additional learning of the self-checkout POS terminal 11 in the existing dictionary file stored in the storage section 106 (the storage area E1 of the existing dictionary file) with the addition registration function.

Specifically, in the self-checkout POS terminal 11, a dictionary file identical to the existing dictionary file, to which the addition or modification is already carried out, stored in the storage section 106 (the storage area E1 of the existing dictionary file) of the store server 10 is incorporated in the object recognition engine. If the operator carries out the additional learning of the existing commodity (or the new commodity) using the self-checkout POS terminal 11, then the appearance image P (in this case, additional learning image) of the existing commodity (or the new commodity) is output from the image capturing section of the self-checkout POS terminal 11.

The object recognition engine generates the first feature amount from the additional learning image P, using the first conversion data contained in the existing dictionary file F1 incorporated in the object recognition engine. The self-checkout POS terminal 11 sends the commodity code of the commodity to which the additional learning is executed, the first feature amount obtained through the additional learning of the commodity and the additional learning image P of the commodity to the store server 10.

The existing dictionary addition registration section 20 acquires the commodity code of the commodity to which the additional learning is executed and the first feature amount obtained through the additional learning of the commodity from the information sent from the self-checkout POS terminal 11. Moreover, the first feature amount obtained through the additional learning of the commodity is registered in the corresponding area of the first feature amount 4K specified with the commodity code contained in the existing dictionary file F1 stored in the storage section 106 (the storage area E1 of the existing dictionary file).

Two feature amounts (the first feature amount 1-1 and the first feature amount 1-2) are set in the item 'first feature amount 4K' of the record R1 shown in Fig. 5. In these two feature amounts, the second feature amount (the first feature amount 1-2) is obtained with the operation of the existing dictionary addition registration section 20 as described above. Further, the set value of the item 'the first feature amount 4K' (the first feature amount 1001) of the new commodity included in the record RN+1 shown in Fig. 5 is also obtained with the operation of the existing dictionary addition registration section 20 as described above.

The image registration section 30 has a function of registering the additional learning image P sent from the self-checkout POS terminal 11 in the storage section 106. The image registration section 30 acquires the commodity code of the commodity to which the additional learning is executed, the first feature amount obtained through the additional learning of the commodity, and a commodity code and an additional learning image P contained in the additional learning image P of the commodity sent from the self-checkout POS terminal 11. The additional learning image P and the commodity code are stored in the storage section 106 (a storage area E3 of the additional learning image) in such a manner that the additional learning image P is associated with the commodity code.

The additional information reflection section 40 has a function of reflecting the additional information contained in the existing dictionary file F1 stored in the storage area E1 to an updated dictionary file stored in the storage area E2 (a second dictionary storage module). The additional information reflection section 40 extracts, from the existing dictionary file F1 right before it is changed to the updated dictionary file, all the information (additional information) that is later changed or added at a store side to the existing dictionary file F1 distributed from the distribution server 12. The additional information reflection section 40 sets the extracted additional information in the updated dictionary file stored in the storage area E2.

The additional information reflection section 40, for example, compares the existing dictionary file F1 right before it is changed to the updated dictionary file with the existing dictionary file F1 originally provided from the sales agency, thereby extracting the difference information of the additional information. Moreover, the additional information reflection section 40 sets each piece of difference information in the corresponding area of the updated dictionary file. In this case, the existing dictionary file F1 originally distributed is maintained in the storage area E1. Further, as one of the other methods, all the data of addable or changeable items is extracted from the existing dictionary file F1 right before it is changed to the updated dictionary file and is respectively copied into corresponding areas of the updated dictionary file.

The second feature amount conversion section 50 has a function of converting the additional learning image P stored in the storage area E3 into a second feature amount using the second conversion data contained in the updated dictionary file stored in the storage area E2.

The updated dictionary addition registration section 60 has a function of registering the second feature amount converted by the second feature amount conversion section 50 in the commodity-related information area of the updated dictionary file stored in the storage area E2. The updated dictionary addition registration section 60 sets the second feature amount in a corresponding area (an item indicating the second feature amount) indicated with the commodity code of the additional learning image (the original image of the second feature amount) in the area of the commodity-related information at the time of registration.

The sending/receiving section 70 has a function of sending or distributing a dictionary file to the self-checkout POS terminal 11 and receiving a feature amount and an additional learning image from the self-checkout POS terminal 11. In the store server 10, if the first feature amount and the additional learning image are received from the self-checkout POS terminal 11, then the existing dictionary file is updated. The sending/receiving section 70 sends the updated existing dictionary file to the self-checkout POS terminal 11 every time it is updated.

In this way, the identity of the existing dictionary file stored in the store server 10 and the existing dictionary file stored in the self-checkout POS terminal 11 is maintained.

Further, in the store server 10, if the updated edition is downloaded from the distribution server 12 to carry out the reflection of the additional information to the updated dictionary file (the updated dictionary file in the storage area E2) and the registration of the second feature amount, the sending/receiving section 70 sends the updated dictionary file to the self-checkout POS terminal 11. If the updated dictionary file is received by the self-checkout POS terminal 11, then the self-checkout POS terminal 11 replaces the existing dictionary file with the updated dictionary file to store the updated dictionary file in the storage section so that it refers to the updated dictionary file from next time.

Sequentially, the store server 10 moves the updated dictionary file stored in the storage area E2 into the storage area E1 as an existing dictionary file (a new existing dictionary file), and the sending/receiving section 70 receives the second feature amount and the additional learning image from the self-checkout POS terminal 11. The store server 10 updates the new existing dictionary file based on the second feature amount received from the self-checkout POS terminal 11. Then, the sending/receiving section 70 sends a new existing dictionary file to which the update of the second feature amount is executed to the self-checkout POS terminal 11, thereby maintaining the identity of the dictionaries of the store server 10 and the self-checkout POS terminal 11. If a new updated edition is downloaded, the dictionary data of the new updated edition is stored in the storage area E2, as described above.

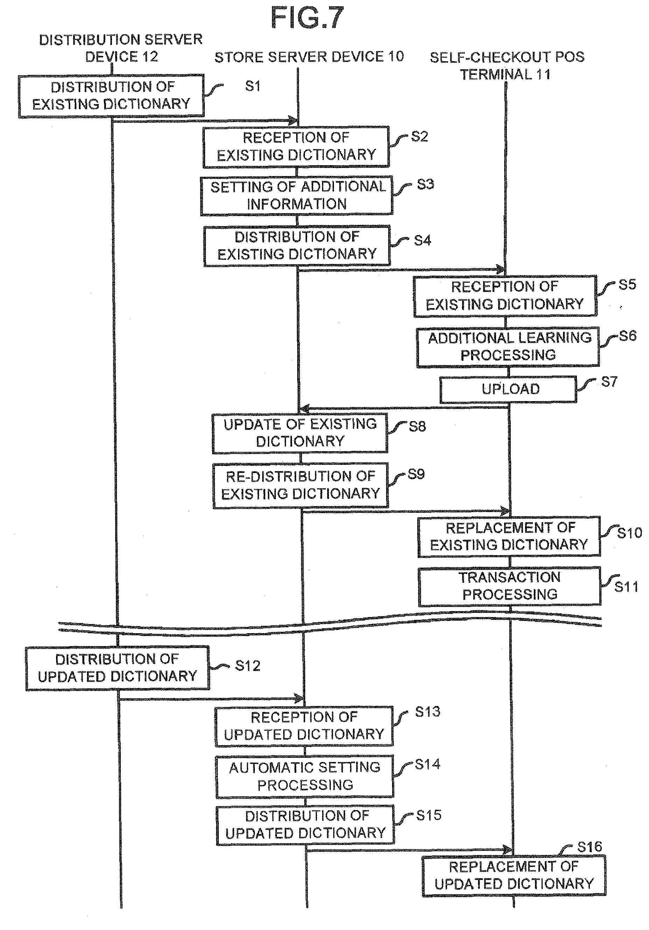

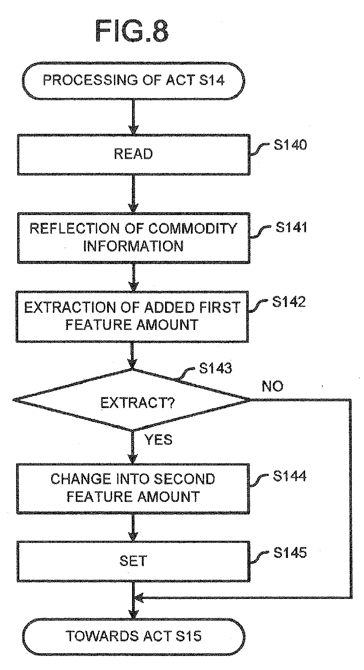

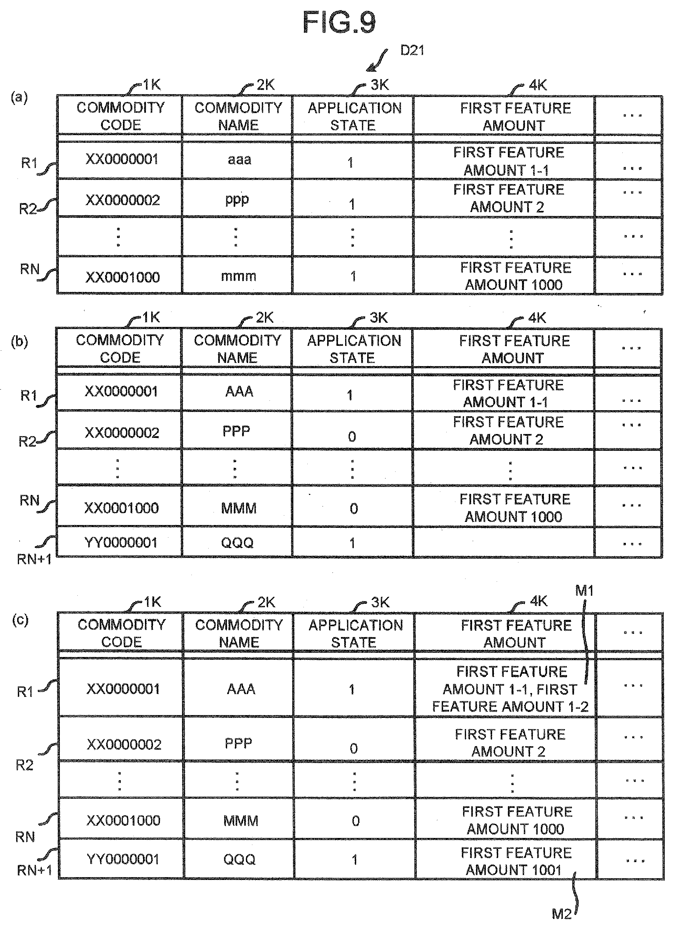

Next, all the operations relating to the automatic update processing of the dictionary file are described with reference to the operation flowcharts shown in Fig. 7 and Fig. 8. It is appropriate to refer to Fig. 9-Fig. 12 in which the set-state of the commodity-related information contained in the dictionary data is illustrated.

Fig. 7 is a flowchart illustrating all the operations, including the automatic update processing, of a whole system (the store server 10, the self-checkout POS terminal 11 and the distribution server 12).

First, the distribution server 12 distributes a dictionary file (the existing dictionary file) to the store server 10 (S1).

If the existing dictionary file is received, the store server 10 stores the existing dictionary file in the storage section 106 (storage area E1) (S2).

Fig. 9(a) is a diagram illustrating the set-state of the commodity-related information contained in the existing dictionary file initially distributed. As shown in Fig. 9(a), the commodity-related information of N existing commodities shown in records R1-RN (N is an integer) is set in the commodity-related information D21. A commodity name consisting of lowercase letters is set in the corresponding area of the commodity name 2K of each existing commodity. Further, a flag '1' is set in all the corresponding areas of the application state 3K of each existing commodity. The first feature amount the number of which is one is set in the corresponding area of the first feature amount 4K of each existing commodity.

Next to Act S2, the store server 10 sets additional information in the existing dictionary file stored in the storage section 106 (storage area E1) (S3). A setting screen is displayed for the manager to manually set the additional information for the existing dictionary file. The set content may be, for example, the change of the commodity information of the existing commodity and the addition of the commodity information of a new commodity.

Fig. 9(b) is a diagram illustrating the set-state when the additional information is set in the existing dictionary file of Fig. 9 (a) . In Fig. 9 (b), through the change of the commodity name from lowercase letters to uppercase letters, the commodity name of uppercase letters is shown in the corresponding area of the commodity name 2K of each existing commodity. Further, a flag '0' resulting from the change of flag is shown in the corresponding areas of the item 'application state 3K' of a part of existing commodities. Further, a record RN+1 representing the commodity-related information of an added new commodity is shown next to the record RN. No first feature amount is set in the corresponding area of the first feature amount 4K in the record RN+1 because a new commodity is not yet learned.

Next to Act S3, the store server 10 distributes the existing dictionary file in which additional information is set to the self-checkout POS terminal 11 (S4).

After receiving the existing dictionary file, the self-checkout POS terminal 11 stores the received existing dictionary file in the storage section thereof (S5). At this moment, the self-checkout POS terminal 11 sets the existing dictionary file as data for comparison for presuming the category of a commodity photographed by the image capturing section. For example, the self-checkout POS terminal 11 sets a path of a reference destination of the data for comparison with the object recognition engine as a path of the existing dictionary file.

Then, the self-checkout POS terminal 11 carries out an additional learning processing (S6). The self-checkout POS terminal 11 carries out a transaction processing in a normal mode using the existing dictionary file stored in the storage section thereof within the business time of the store. The self-checkout POS terminal 11 carries out the additional learning processing in a study mode outside the business time after the store is closed.

In the additional learning processing, the operator of the self-checkout POS terminal 11 inputs the commodity code of the commodity to which the additional learning is executed and holds the commodity over a reading window. The image capturing section captures the image of the commodity to output the appearance image (additional learning image) of the commodity. The additional learning image is converted into the feature amount (the first feature amount) using the conversion data (first conversion data) contained in the existing dictionary file stored in the storage section of the self-checkout POS terminal 11. Moreover, the first feature amount is additionally registered in the corresponding area of the first feature amount 4K of the record specified with the commodity code in the existing dictionary file stored in the storage section of the self-checkout POS terminal 11.

If the same commodity is additionally learned for many times, the additional learning processing is carried out repeatedly, and a plurality of first feature amounts is additionally registered in the corresponding area of the first feature amount 4K of the record specified with the commodity code in the existing dictionary file.

If there is a plurality of commodities to which the additional learning is executed, the additional learning processing is carried out for each commodity, the first feature amount of each commodity is additionally registered in the corresponding area of the first feature amount 4K of the record specified with each commodity code in the existing dictionary file.

Further, the image (additional learning image), right before the conversion into the first feature amount, registered in the existing dictionary file is stored in the storage section of the self-checkout POS terminal 11 in association with the commodity code.

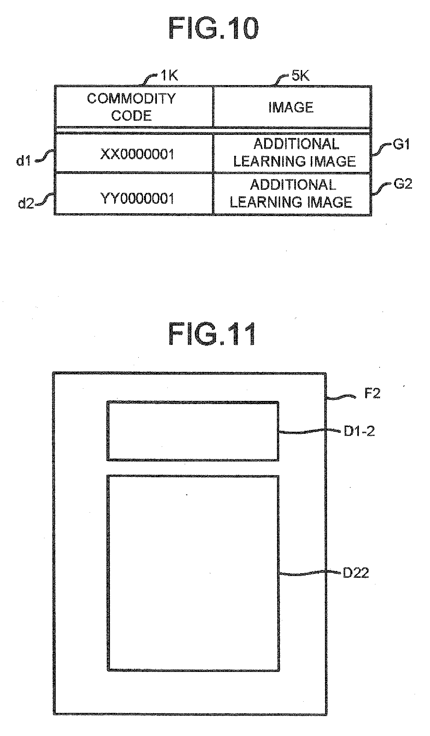

Fig. 10 is a diagram illustrating the storage-state of additional learning images in the storage section of the self-checkout POS terminal 11. As shown in Fig. 10, storage areas of a commodity code 1K and an image 5K are set in the storage section in such a manner that the commodity code is associated with the image. In the example, the storage-state of the additional learning images (respectively, additional learning images G1 and G2) of the existing commodity included in the record R1 and the new commodity included in the record RN+1 are shown. Further, the data (commodity codes d1 and d2) corresponding to the commodity code 1K is commodity codes input by the operator at the time of executing an additional learning process. The commodity codes input by the operator are the same as the commodity codes 1K contained in the existing dictionary file.

Fig. 9(c) is a diagram exemplifying a set-state of commodity-related information when the first feature amount is additionally registered in the existing dictionary file shown in Fig. 9 (b) . Fig. 9 (c) shows, as an example, a set-state at the time that the existing commodity included in the record R1 and the new commodity included in the record RN+1 are additionally learned. A first feature amount M1 (a first feature amount 1-2) obtained from an additional learning image G1 (refer to Fig. 10) is shown in the corresponding area of the first feature amount 4K of the record R1. Further, a first feature amount M2 (a first feature amount 1001) obtained from an additional learning image G2 (refer to Fig. 10) is shown in the corresponding area of the first feature amount 4K of the record RN+1.

Following the processing in Act S6, the self-checkout POS terminal 11 uploads the additional learning image associated with the commodity code and the existing dictionary file to the store server 10 (S7). For example, the self-checkout POS terminal 11 uploads the commodity codes and the additional learning images shown in Fig. 10. Further, the self-checkout POS terminal 11 uploads the existing dictionary data shown in Fig. 9 (c) . The uploaded commodity codes and additional learning images are associated with each other, similar to that shown in Fig. 10, in the storage section (storage area E3) of the store server 10.

Sequentially, if the additional learning images and the existing dictionary file are uploaded from the self-checkout POS terminal 11, then the store server 10 updates the existing dictionary file (the existing dictionary file shown in Fig. 9 (b)) stored in the storage section 106 (storage area E1) right before the latest uploaded existing dictionary file (S8).

In the processing, the values in the corresponding areas of the items 'first feature amount 4K' included in the existing dictionary file (the existing dictionary file shown in Fig. 9(c)) uploaded from the self-checkout POS terminal 11 and the previously distributed existing dictionary file (the existing dictionary file shown in Fig. 9(b)) are compared. The feature amount not included in the previously distributed existing dictionary file is extracted from the uploaded existing dictionary file and the extracted feature amount is set in a corresponding area of the existing dictionary file at the time of distribution to update the existing dictionary file.

The same processing is carried out if an uploading operation is executed from a plurality of self-checkout POS terminals 11. In this case also, the value in the corresponding area of the first feature amount 4K of each uploaded existing dictionary file is compared. The feature amount not included in the former existing dictionary file is extracted from the each uploaded existing dictionary file and these extracted feature amounts are set in the corresponding area of the former existing dictionary file. Further, the commodity code and the additional learning image uploaded from each self-checkout POS terminal 11 are stored in the storage area E3 in such a manner that they are associated with each other.

Then, the store server 10 distributes the updated existing dictionary file to each self-checkout POS terminal 11 (S9).

Next to the processing in Act S9, after receiving the updated existing dictionary file, the self-checkout POS terminal 11 replaces the existing dictionary file stored in the storage section thereof with the updated existing dictionary file (S10).

Additionally, it is appropriate to execute the processing in Acts 1-10 outside the business time of the store.

Next, the self-checkout POS terminal 11 carries out a transaction processing in a normal mode using the updated existing dictionary file right after the store is opened (S11).

Then, the transaction processing in Act S11 is carried out over a period of time, or the transaction processing using the updated existing dictionary file that is updated for many times is carried out after the processing in Acts S6-S11 is repeatedly carried out for many times.

After that, if an updated edition of the existing dictionary data is released at a certain point in time, the distribution server 12 distributes the updated dictionary file to the store server 10 (S12).

If receiving the updated dictionary file, the store server 10 stores the updated dictionary file in the storage section 106 (storage area E2) (S13).

For example, in the case in which, in the updated dictionary file, the first conversion data D1 of the existing dictionary file F1 (refer to Fig. 4) is merely altered to the second conversion data, then the commodity-related information contained in the updated dictionary file is substantially identical to that shown in Fig. 9(a).

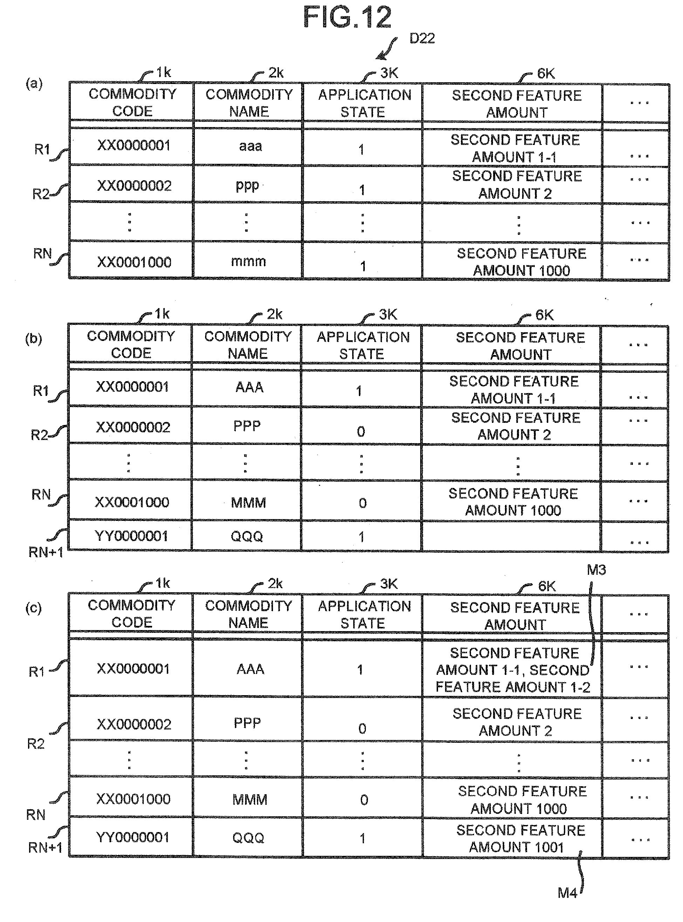

Fig. 11 is a concept diagram illustrating the data structure of the updated dictionary file. As shown in Fig. 11, the updated dictionary file F2 includes a second conversion data D1-2 and commodity-related information D22. The values of the various parameters, used in the conversion processing into the second feature amount, which are different from the first conversion data D1 are defined in the second conversion data D1-2. The data structure of the commodity-related information D22 is shown in Fig. 12(a).

In the example of the data structure of the commodity-related information D22 shown in Fig. 12(a), the value of the first feature amount 4K presented in the data structure of the commodity-related information D21 shown in Fig. 9 (a) is changed into the value of the second feature amount 6K. The first feature amount obtained by using the first conversion data D1 is set in the first feature amount 4K, and the second feature amount obtained by using the second conversion data D1-2 is set in the second feature amount 6K.

An automatic setting processing carried out for the updated dictionary file is described below. In the following description, the state shown in Fig. 9(c) is the latest state of the existing dictionary file in the store server 10. Moreover, it is exemplified that the existing dictionary file in the latest state is changed to the updated dictionary file F2 shown in fig. 11 (commodity-related information refers to Fig. 12(a)) through the automatic setting processing.

Next to the processing in Act S13, the store server 10 automatically sets the various kinds of information added at the store side in the existing dictionary file (refer to the commodity-related information shown in Fig. 9(c)) for the updated dictionary file (refer to the updated dictionary file F2 shown in Fig. 11 and the commodity-related information D22 shown in Fig. 12(a)) stored in the storage section 106 (the storage area E2) (S14).

Fig. 8 is a diagram illustrating the detailed flow of the automatic setting processing (Act S14) carried out in the store server 10.

First, the CPU of the control section 100 of the store server 10 reads the newest existing dictionary file from the storage area E1 of the storage section 106 and the updated dictionary file from the storage area E2 and copies or decompresses the read dictionary files in the RAM (S140).

Next, the CPU of the store server 10 extracts the entire commodity information of the existing dictionary file and overwrites the data in the corresponding area of the updated dictionary file with the extracted data (S141).

In a specific example, first, all the data except for the data in the corresponding area of the first feature amount 4K is extracted from the commodity-related information (Fig. 9(c)) contained in the existing dictionary file. In the example, all the data (commodity information) in the corresponding areas of the commodity code 1K, the commodity name 2K and the application state 3K is extracted. Moreover, each extracted data is overwritten on the data in each corresponding area of the commodity information (Fig. 12(a)) contained in the updated dictionary file.

In this way, the state of the commodity information contained in the existing dictionary file shown in Fig. 9(c) is reflected in the commodity information contained in the updated dictionary file shown in Fig. 12(a) to obtain the set-state shown in Fig. 12 (b) . The additional information added at the store side is reflected in the updated dictionary file.

Sequentially, the CPU of the store server 10 compares the value in the corresponding area of the first feature amount 4K of the commodity-related information (Fig. 9(c)) contained in the existing dictionary file with that in the corresponding area of the second feature amount of the commodity-related information (Fig. 12(b)) contained in the updated dictionary file. Then, the commodity code associating with a feature amount which is not included in the updated dictionary file is extracted from the existing dictionary file (S142). The feature amount which is included in the existing dictionary file but not included in the updated information file can be detected as a difference between the number of the first feature amounts contained in the existing dictionary file and that of the second feature amounts contained in the updated dictionary file. For example, it is assumed that the number of the first feature amounts contained in the existing dictionary file is 2 and that of the second feature amounts contained in the updated dictionary file is 1. In this case, as the number of the feature amounts contained in the existing dictionary file is more than that of the feature amounts contained in the updated dictionary file, it is detected that the feature amount not included in the updated dictionary file is included in the existing dictionary file.

Then, the CPU of the store server 10 determines whether or not the commodity code is extracted (S143). If it is determined that no commodity code is extracted (S143: No), the automatic setting processing is ended.

On the other hand, if it is determined that the commodity code is extracted (S143: Yes), then the processing in Act S144 is executed. In a specific example, M1 and M2 shown in Fig. 9 (c) of the first feature amounts are not included in the second feature amounts shown in Fig. 12 (b) . Thus, the CPU of the store server 10 extracts the commodity codes (commodity codes 'XX0000001' and 'YY0000001') respectively corresponding to M1 and M2 of the first feature amounts, and thus, the result of the determination in Act S143 is 'Yes'.

Next, the CPU of the store server 10 reads the additional learning images, stored in the storage section 106 (storage area E3), which respectively correspond to the extracted commodity codes by using the extracted commodity codes as a keyword. Then, the additional learning images are converted into the second feature amounts with the second conversion data D1-2 contained in the updated dictionary file (S144).

The generated second feature amounts are respectively associated with the commodity codes serving as an extraction keyword. If there is a plurality of additional learning images, the processing in Act S144 is carried out for the additional learning images one by one, and each generated second feature amount is associated with a corresponding commodity code included in the extraction keyword. The generated second feature amounts are respectively set in corresponding areas of the second feature amounts, contained in the updated dictionary file, that are respectively specified with the commodity codes serving as the extraction keyword (S145).

Fig. 12(c) shows the result of the setting of the second feature amounts obtained from the additional learning images in the updated dictionary file. The first feature amounts M1 and M2 that are additionally learned at the store side are set in the updated dictionary file as the second feature amounts M3 and M4 (second feature amounts 1-2 and 1001).

Further, in the example, the existing dictionary file is compared with the updated dictionary file to detect the feature amounts obtained through the additional learning as the difference between the number of the feature amounts included in the existing dictionary file and that included in the updated dictionary file to generate corresponding second feature amounts in Act S142; however, other methods are applicable. For example, the storage section 106 (storage area E3) is inspected and the additional learning image may be converted into the second feature amount if it is stored in the storage section 106. Each image stored in the storage area E3 is an additional learning image and is therefore converted into the second feature amount.

Further, after the additional learning image is converted into the second feature amount, the commodity code and corresponding data of the additional learning image that are stored in the storage area E3 are deleted.

In this way, the automatic setting processing in Act S14 is ended.

Next to the processing in Act S14, the store server 10 distributes the updated dictionary file to which the setting processing is executed to the self-checkout POS terminal 11 (S15).

Upon receiving the updated dictionary file, the self-checkout POS terminal 11 stores the received updated dictionary file in the storage section and sets the updated dictionary file as a reference destination of the data for comparison from the next time (S16).

Then, the updated dictionary file is moved from the storage area E2 to the storage area E1 to carry out the processing similar to that shown in Acts S6-S11 as processing to the existing dictionary file.

Further, if a new updated edition of the dictionary file is released, then the processing in Acts S12-S16 is carried out in the same way under the condition in which the updated dictionary data stored in the storage area E1 of the store server 10 is taken as an existing dictionary data and the newly released updated dictionary data is stored in the storage area E1.

In the present embodiment, a self-checkout POS terminal is installed in an in-store network; however, the present invention is not limited to this. Not limited to the self-checkout POS terminal, an apparatus such as a vertical type scanner which carries out a commodity recognition processing using dictionary data is installed in the in-store network, and the operations relating to the update processing similar to that carried out in the self-checkout POS terminal may be carried out between the apparatus such as the vertical type scanner and a store server.

In the present embodiment, the application of an information processing apparatus of the invention to the store server is exemplified. However, the application of the information processing apparatus is not limited to this, for example, modification may be performed so that the information processing apparatus is applicable to a self-checkout POS terminal or a vertical type scanner.

In the case of the self-checkout POS terminal, an existing dictionary file or an updated dictionary file is directly downloaded from the distribution server 12, and the automatic update processing according to the updated dictionary file is carried out, using the existing dictionary file stored in the self-checkout POS terminal and an image obtained through an additional learning.

Moreover, in the case of the vertical type scanner, an automatic update processing according to an updated dictionary file is carried out through a single vertical type scanner or through cooperation with a POS terminal connectable to the vertical type scanner, using the existing dictionary file stored in the vertical type scanner or the POS terminal and an image obtained through an additional learning.

The various programs used by the information processing apparatuses according to the present embodiment and modification of the embodiment may be recorded and provided in a computer-readable recording medium such as a CD-ROM, a Flexible Disk (FD), a CD-R, a DVD (Digital Versatile Disk) in the form of installable or executable file and read into the flash ROMs of the information processing apparatuses to be executed.

Further, the programs may be stored in a computer connected with a network such as the Internet and downloaded via the network to be provided.

The structure of the information processing apparatus and the structure of a program are described in the foregoing embodiment and modification thereof; however, the foregoing embodiment and modification thereof have been presented by way of example only, and are not intended to limit the scope of the present invention. Novel embodiments and modifications may be embodied in a variety of other forms; furthermore, various omissions, substitutes and changes may be devised without departing from the framework of the inventions. The accompanying claims and their equivalents are intended to cover such forms or modifications as would fall within the scope of the inventions.

## Claims

1. An information processing apparatus, comprising:
a first dictionary storage module configured to store a first dictionary data in which a first feature amount calculated according to a commodity information or image of a commodity is set;
an image storage module configured to store the image serving as a basis of the calculation of the first feature amount additionally set in the first dictionary data;
a second dictionary storage module configured to store a second dictionary data of successor of the first dictionary data;
an additional information setting module configured to extract the commodity information to which an additional setting or a change setting is executed from the first dictionary data stored in the first dictionary storage module to set the extracted commodity information in the second dictionary data; and
a feature amount re-calculation module configured to re-calculate a second feature amount corresponding to the second dictionary data according to the image stored in the image storage module to set the calculated second feature amount for a commodity set in the second dictionary data.

2. The information processing apparatus according to claim 1, wherein the first dictionary storage module stores, as the first dictionary data, the data in which at least commodity code of a new commodity is additionally set as the commodity information of the commodity and the data in which a first feature amount of the new commodity is additionally set as the first feature amount, the additional information setting module extracts the commodity code of the new commodity that is additionally set from the first dictionary data stored in the first dictionary storage module to set the extracted commodity code in the second dictionary data, and the feature amount re-calculation module re-calculates the second feature amount corresponding to the second dictionary data according to the image of the new commodity stored in the image storage module to additionally set the calculated second feature amount in the second dictionary data in association with the commodity code.

3. The information processing apparatus according to claim 1 or 2, wherein the commodity information to which additional setting or change setting is executed includes information indicating a commodity name of each commodity or information indicating whether or not presumption of a commodity is carried out based on a feature amount.

4. The information processing apparatus according to any one of claims 1 to 3, wherein the first dictionary storage module stores the first dictionary data in which the first feature amount of an existing commodity is additionally set as the first feature amount, and the feature amount re-calculation module re-calculates the second feature amount corresponding to the second dictionary data according to the image of the existing commodity stored in the image storage module to additionally set the calculated second feature amount in association with the commodity code of the existing commodity preset in the second dictionary data.

5. The information processing apparatus according to any one of claims 1 to 4, wherein the first dictionary data includes a proper information contained in the first dictionary data for deriving the first feature amount from the image of the commodity, and the second dictionary data includes a proper information contained in the second dictionary data for deriving the second feature amount from the image of the commodity.

6. A method for updating a dictionary data, including:
setting additionally a first feature amount calculated according to a commodity information or image of a commodity in a first dictionary data;
storing the image serving as a basis of the calculation of the first feature amount additionally set in the first dictionary data;
storing a second dictionary data of a successor of the first dictionary data;
extracting the commodity information to which an additional setting is executed from the first dictionary data;
setting the extracted commodity information in the second dictionary data;
re-calculating a second feature amount corresponding to the second dictionary data according to the image; and
additionally setting the calculated second feature amount for the commodity set in the second dictionary data.

7. The method according to claim 6, further comprising:
storing, as the first dictionary data, the data in which at least commodity code of a new commodity is additionally set as the commodity information of the commodity and the data in which a first feature amount of the new commodity is additionally set as the first feature amount;
extracting the commodity code of the new commodity that is additionally set from the first dictionary data stored in the first dictionary storage module to set the extracted commodity code in the second dictionary data; and
re-calculating the second feature amount corresponding to the second dictionary data according to the image of the new commodity stored at the image storing step to additionally set the calculated second feature amount in the second dictionary data in association with the commodity code.

8. The method according to claim 6 or 7, wherein the commodity information to which additional setting or change setting is executed includes information indicating a commodity name of each commodity or information indicating whether or not presumption of a commodity is carried out based on a feature amount.

9. The method according to any one of claims 6 to 8, further comprising:
storing the first dictionary data in which the first feature amount of an existing commodity is additionally set as the first feature amount; and
re-calculating the second feature amount corresponding to the second dictionary data according to the image of the existing commodity stored at the image storing step to additionally set the calculated second feature amount in association with the commodity code of the existing commodity preset in the second dictionary data.

10. The method according to any one of claims 6 to 9, wherein the first dictionary data includes a proper information contained in the first dictionary data for deriving the first feature amount from the image of the commodity, and the second dictionary data includes a proper information contained in the second dictionary data for deriving the second feature amount from the image of the commodity.
